# EUROPÄISCHE PATENTANMELDUNG

(11) **EP 1 420 571 A1**
(43) Veröffentlichungstag der Anmeldung: **19.05.2004**
(21) Anmeldenummer: 03025193.8
(22) Anmeldetag: 04.11.2003
(51) Int. Cl.: H04M 3/42, H04Q 3/72

(54) **Verfahren und Vorrichtung zum Ermitteln einer übergeordneten Anrufernummer**

(30) Priorität: 16.11.2002 DE 10253497
(71) Anmelder: Tenovis GmbH & Co. KG, 60326 Frankfurt am Main (DE)
(72) Erfinder: Rodewald, Frank, 50181 Bedburg (DE); Kayser, Udo, 42285 Wuppertal (DE); Hempel, Harald, 45133 Essen (DE)
(74) Vertreter: Patentanwaltskanzlei WILHELM & BECK

(57) **Zusammenfassung**

Es wird ein Verfahren zum Ermitteln einer übergeordneten Anrufernummer zwischen einem rufenden Endgerät und einem gerufenen Endgerät über eine Vermittlungsanlage vorgeschlagen, wobei die Vermittlungsanlage einen Verbindungswunsch erhält, wobei der Vermittlungsanlage eine Rufnummer des rufenden Endgerätes und eine Rufnummer des gerufenen Endgerätes übermittelt wird, wobei die Vermittlungsanlage eine Telefonverbindung für einen beliebigen Dienst zum gerufenen Endgerät aufbaut, und wobei die Vermittlungsanlage aus der Rufnummer des rufenden Endgerätes eine übergeordnete Rufnummer ermittelt und an das gerufene Endgerät signalisiert. Ferner wird ein Verfahren zum Ermitteln einer übergeordneten Rufnummer eines rufenden Endgerätes vorgeschlagen, wobei von einer Recheneinheit eine Rufnummer des rufenden Endgerätes über eine Vermittlungsanlage empfangen wird, wobei die Recheneinheit aus der Rufnummer des rufenden Endgerätes eine übergeordnete Rufnummer ermittelt und an die Vermittlungsanlage übermittelt. Ferner wird eine Vermittlungsanlage und eine Recheneinheit zur Abarbeitung des erfindungsgemäßen Verfahrens vorgeschlagen.

## Beschreibung

Die Erfindung betrifft ein Verfahren zur Ermittlung einer übergeordneten Anrufernummer sowie eine Vorrichtung hierfür.

Viele Angestellte von Unternehmen, insbesondere solche Angestellte, die Kundenkontakte unterhalten, verfügen heutzutage über mehrere Kommunikationsendgeräte. Dazu zählt unter anderem ein dienstliches Endgerät (Festanschluss) an einer Vermittlungsanlage (beispielsweise eine Private Automatic Branch Exchange PABX) des Arbeitgebers, bei wechselnden Einsatzorten gegebenenfalls auch mehrere dienstliche Endgeräte. Weiterhin zählen zu den von den Angestellten benutzten Kommunikationsendgeräten beispielsweise ein dienstliches DECT-Mobiltelefon an der Vermittlungsanlage und/oder ein dienstliches GSM-Mobiltelefon und/oder ein dienstliches Faxgerät. Ferner können die Angestellten über mehrere private Kommunikationsendgeräte verfügen, wie beispielsweise über einen privaten Festanschluss (gegebenenfalls auch mehrere), über ein privates GSM-Mobiltelefon, über ein privates Faxgerät, über ein ISDN-Datenendgerät, über einen Anrufbeantworter usw.

Jedes dieser Endgeräte ist unter einer individuellen Rufnummer erreichbar. Dies bedeutet, dass der von einem Außenstehenden gewünschte Angestellte des Unternehmens abhängig vom gewählten Kommunikationsdienst (Telefon, Fax, Daten), benutzten Kommunikationsendgerät und Zeitpunkt unter unterschiedlichen Rufnummern erreichbar ist.

Ähnliches gilt für die Rufnummer des rufenden Angestellten bei abgehenden Verbindungen. Baut ein Teilnehmer A von einem seiner Endgeräte eine Verbindung zu einem Teilnehmer B auf, so wird dem Teilnehmer B die Rufnummer desjenigen Endgerätes signalisiert, das der Teilnehmer A gerade zum Verbindungsaufbau verwendet.
Aus den geschilderten Tatsachen ergibt sich ein Nachteil insofern, dass der gerufene Teilnehmer B, wenn er den rufenden Teilnehmer A anhand seiner signalisierten Rufnummer erkennen will, dessen Rufnummern alle kennen bzw. gespeichert haben muss. Verfügt das Endgerät des Teilnehmers B über ein elektronisches Telefonbuch, über das gespeicherten Rufnummern Namen zugeordnet werden können, so müssen in diesem Telefonbuch alle möglichen Rufnummern von rufenden Teilnehmern mit zugehörigen Namen eingetragen werden. Unübersichtliche und unvollständige Telefonbücher können daraus resultieren. Außerdem bedürfen die Telefonbucheinträge einer permanenten und aufwendigen Datenpflege.

Aus der US 6,067,546 ist ein Verfahren bekannt, bei dem einem angerufenen Teilnehmer die Rufnummer des anrufenden Teilnehmers übermittelt wird. Mit Hilfe dieser Rufnummer kann der angerufene Teilnehmer daraufhin spezifische Informationen über den anrufenden Teilnehmer mittels eines Netzwerkzugriffs von einer Datenbank anfordern. Diese Informationen werden dem angerufenen Teilnehmer von der Datenbank auf ein Endgerät des angerufenen Teilnehmers übertragen und können dort angezeigt werden.

Es ist die Aufgabe der vorliegenden Erfindung, ein Verfahren bereitzustellen, mit dem eine verbesserte, komfortablere Nutzung von Telekommunikationsverbindungen unterstützt wird.

Die Aufgabe wird gelöst durch ein Verfahren mit den Merkmalen gemäß Patenanspruch 1 und mit einem Verfahren mit den Merkmalen gemäß Patentanspruch 10. Die Aufgabe wird ferner gelöst mit einer Vermittlungsanlage mit den Merkmalen gemäß Patentanspruch 16 und mit einer Recheneinheit mit den Merkmalen gemäß Patentanspruch 17.

Bevorzugte Weiterbildungen der erfindungsgemäßen Verfahren sind in den abhängigen Ansprüchen angegeben.

Die Aufgabe, die der vorliegenden Erfindung zugrunde liegt, wird mit einem Verfahren zum Aufbauen einer Telefonverbindung für einen beliebigen Dienst zwischen einem rufenden Endgerät und einem gerufenen Endgerät über eine Vermittlungsanlage gelöst, wobei die Vermittlungsanlage einen Verbindungswunsch erhält, wobei der Vermittlungsanlage eine Rufnummer des rufenden Endgerätes (Calling Party Number) und eine Rufnummer des gerufenen Endgerätes übermittelt wird, wobei die Vermittlungsanlage die Telefonverbindung für den beliebigen Dienst zum gerufenen Endgerät aufbaut, und wobei die Vermittlungsanlage aus der Rufnummer des rufenden Endgerätes eine einstellbare, übergeordnete Rufnummer ermittelt und an das gerufene Endgerät übermittelt.

Dadurch ist es in vorteilhafter Weise möglich, dass bei gehender Signalisierung unabhängig vom gewählten Telekommunikationsdienst und -zeitpunkt immer eine gleichbleibende, übergeordnete Rufnummer des rufenden Teilnehmers an den gerufenen Teilnehmer übermittelt wird. Ferner ist es für den gerufenen Teilnehmer von Vorteil, dass eine Zuordnung der vom rufenden Teilnehmer signalisierten Nummer zur Identität des rufenden Teilnehmers vereinfacht ist. Dadurch ist es sowohl für den rufenden als auch für den gerufenen Teilnehmer von Vorteil, dass, unabhängig vom Endgerät, das der rufende Teilnehmer zum Aufbau der Verbindung benutzt, stets eine gleichbleibende, übergeordnete Rufnummer des rufenden Teilnehmers an den gerufenen Teilnehmer signalisiert wird. Bei Bedarf kann die übergeordnete Rufnummer aufgrund ihrer Einstellbarkeit auf einfache Weise geändert werden. Ferner ist es dadurch in vorteilhafter Weise beispielsweise möglich, Gruppen von rufenden Endgeräten mit einer oder mehreren gemeinsamen, übergeordneten Rufnummern auszustatten, bzw. diese Gruppen abzuändern.

Dies hat insbesondere bei Nutzung von Privatanschlüssen den Vorteil, dass dem gerufenen Teilnehmer die privaten Rufnummern nicht in unerwünschter Weise bekannt werden.

Das erfindungsgemäße Verfahren ist weiterhin dadurch gekennzeichnet, dass die Vermittlungsanlage an ein Netzwerk angeschlossen ist, wobei ferner eine Recheneinheit an das Netzwerk angeschlossen ist. Rufnummern von rufenden Endgeräten mit zugeordneten übergeordneten Rufnummern sind in der Recheneinheit abgelegt, wobei die Vermittlungsanlage zum Ermitteln der übergeordneten Rufnummer über das Netzwerk auf die Recheneinheit zugreift.

In vorteilhafter Weise ist es dadurch möglich, eine Datenverwaltung der Rufnummern von der Vermittlungsanlage auf eine über ein Netzwerk mit der Vermittlungsanlage verbundene Recheneinheit auszulagern.

Das erfindungsgemäße Verfahren zeichnet sich weiterhin dadurch aus, dass die Rufnummern und die übergeordneten Rufnummern der rufenden Endgeräte zentral auf der Recheneinheit verwaltet werden können. Dabei ist es möglich, dass die Verwaltung der Daten sowohl durch den betreffenden "Inhaber" der übergeordneten Rufnummer als auch durch einen Systemadministrator erfolgen kann.

Erfindungsgemäß wird die Aufgabe ferner gelöst mit einem Verfahren zum Ermitteln einer übergeordneten Rufnummer eines rufenden Teilnehmers, wobei eine Vermittlungsanlage von einer Recheneinheit eine Rufnummer des rufenden Teilnehmers empfängt. Die Recheneinheit ermittelt aus der Rufnummer des rufenden Teilnehmers eine übergeordnete Rufnummer und gibt diese an die Vermittlungsanlage aus.

Dadurch ist es in vorteilhafter Weise möglich, Regeln zur Ermittlung der übergeordneten Rufnummer auf der Recheneinheit kundenindividuell und unabhängig von der Vermittlungsanlage zu gestalten. Ferner können durch die Verwendung von Programmiersprachen für systemorientierte Prozesse, wie z.B. PERL, in komfortabler Weise auch komplexe Abhängigkeiten und Zuordnungen der Rufnummern zu den übergeordneten Rufnummern realisiert werden. Außerdem ist durch die Auslagerung der Datenverwaltung auf die Recheneinheit prinzipiell ein weltweiter Zugriff zur Konfiguration der Daten auf der Recheneinheit durch spezifische Anwender möglich.

Die Erfindung wird im folgenden anhand der beigefügten Figuren näher beschrieben. Dabei zeigt:
- Figur 1: eine prinzipielle Topologiestruktur einer Telekommunikationsvorrichtung, mit der das erfindungsgemäße Verfahren einsetzbar ist;
- Figur 2: eine schematische Darstellung eines Ausführungsbeispiels des erfindungsgemäßen Verfahrens zur Ermittlung einer übergeordneten Rufnummer des rufenden Endgerätes;
- Figur 3: eine schematische Darstellung eines Ausführungsbeispiels des erfindungsgemäßen Verfahrens; und
- Figur 4: eine prinzipielle Darstellung einer in Tabellenform in der Vermittlungsanlage abgelegten Zuordnung von Nummern von rufenden Endgeräten zu den entsprechenden übergeordneten Rufnummern.

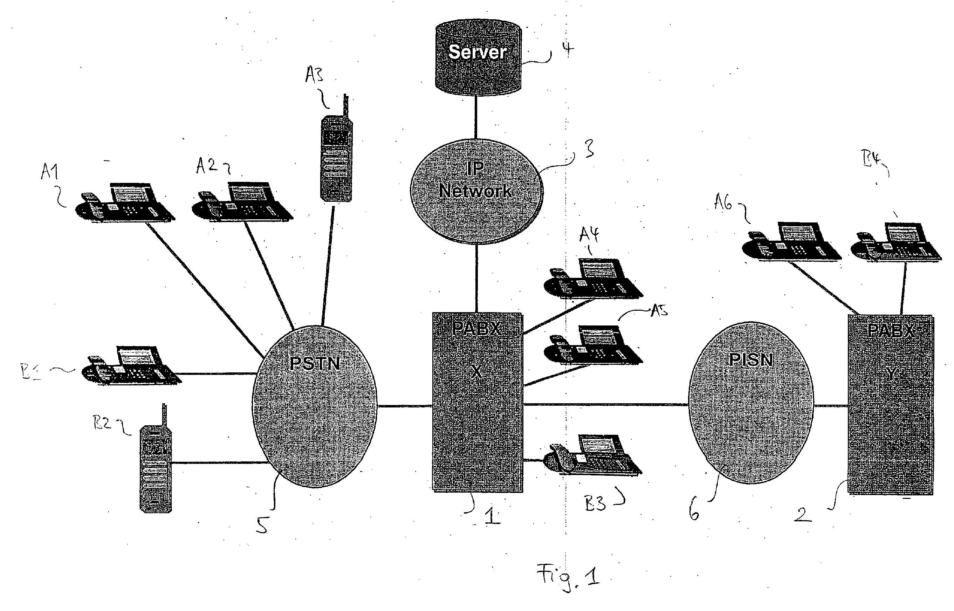

Figur 1 zeigt eine prinzipielle Topologiestruktur einer Telekommunikationsvorrichtung, mit der das erfindungsgemäße Verfahren einsetzbar ist. Eine Vermittlungsanlage 1 ist an ein öffentliches Telekommunikationsnetz 5 angeschlossen. Ferner ist eine weitere Vermittlungsanlage 2 an ein privates Telekommunikationsnetz 6 angeschlossen. Die Vermittlungsanlage 1 ist weiterhin an das private Telekommunikationsnetz 6 und ferner an ein IP-basiertes Netzwerk 3 angeschlossen, an das außerdem eine Recheneinheit 4 angeschlossen ist. Es sind eine Vielzahl von Endgeräten angeordnet. Für die Erläuterung der Erfindung sind die Endgeräte in rufende und gerufene Endgeräte unterteilt. Rufende Endgeräte A1 bis A6 und gerufene Endgeräte B1 bis B4 sind verteilt an das öffentliche Telekommunikationsnetz 5, an die Vermittlungsanlage 1 und an die weitere Vermittlungsanlage 2 angeschaltet.

Zu einer vereinfachten und besseren Übersicht zeigt die Telekommunikationsvorrichtung der Figur 1 lediglich Endgeräte für den Dienst "Telefonie". Endgeräte anderer Dienste (beispielsweise Fax, Daten...) können entsprechend eingefügt werden. Das Netzwerk 3 kann vorzugsweise ein IP-basiertes LAN oder WAN sein.

Nachfolgend wird anhand der in Figur 1 gezeigten Topologiestruktur ein Ausführungsbeispiel des erfindungsgemäßen Verfahrens beschrieben. Dabei führt das rufende Endgerät A4, das unmittelbar an die Vermittlungsanlage 1 angeschaltet ist, einen Verbindungsaufbau zum gerufenen Endgerät B1, das an das öffentliche Telekommunikationsnetz 5 angeschaltet ist, durch.
1. Ein Benutzer des rufenden Endgerätes A4 wählt, um den Benutzer des gerufenen Endgerätes B1 zu erreichen, Nummern, die in der Vermittlungsanlage 1 dem gerufenen Endgerät B1 zugeordnet sind.
2. Die Vermittlungsanlage 1 erkennt nach Durchlauf einer Wahlbewertung, dass der Anruf des rufenden Endgerätes A4 an das gerufene Endgerät B1 in das öffentliche Telekommunikationsnetz 5 geroutet werden muss. Bevor der Rufaufbau zum öffentlichen Telekommunikationsnetz 5 erfolgt, wird die vom öffentlichen Telekommunikationsnetz 5 in der Verbindungsaufbaumeldung des rufenden Endgerätes A4 erhaltene Nummer des rufenden Endgerätes A4 auf internationales Niveau angehoben (z.B. 211 5354 1234 → +49 211 5354 1234).
3. Die Vermittlungsanlage 1 formuliert eine Anfrage an die Recheneinheit 4 mit dem Parameter "Nummer des rufenden Endgerätes" (49 211 5354 1234) und übergibt die Anfrage an das Netzwerk 3.
4. Das IP-basierte Netzwerk 3 (LAN oder WAN) ermittelt durch eine Domain-Namen-Service Abfrage die IP-Adresse der Recheneinheit 4.
5. Die Recheneinheit 4 ermittelt die übergeordnete Rufnummer des rufenden Endgerätes A4 (z.B. 49 211 5354 4710) und schickt diese über das IP-basierte Netzwerk 3 an die Vermittlungsanlage 1.
6. Die Vermittlungsanlage 1 übermittelt nun die übergeordnete Rufnummer des rufenden Endgerätes A4 als Nummer des rufenden Endgerätes A4 in der Verbindungsmeldung zum öffentlichen Telekommunikationsnetz 5. In einer weiteren Ausgestaltung des erfindungsgemäßen Verfahrens, in der die übergeordnete Rufnummer lediglich in einem internen Format (4710) übergeben wird, ist es eine zusätzliche Aufgabe der Vermittlungsanlage 1, die übergeordnete Rufnummer um die Rufnummer der Vermittlungsanlage 1 (49 211 5354) zu ergänzen.
7. Das öffentliche Telekommunikationsnetz 5 routet den Anruf zum gerufenen Endgerät B1. Dem gerufenen Endgerät wird die übergeordnete Rufnummer (49 211 5354 4710) des rufenden Endgerätes A4 angezeigt bzw. signalisiert und kann in eine Anrufliste des gerufenen Endgerätes B1 eingetragen werden.

Die individuelle Rufnummer des rufenden Endgerätes wird abhängig vom Ort in der in Figur 1 gezeigten Topologiestruktur, von dem aus das rufende Endgerät seine Verbindung aufbaut, wie folgt ermittelt:

Für den Fall, dass das rufende Endgerät an die Vermittlungsanlage 1, die einen Zugang zum Netzwerk 3 aufweist (anlagenintern), angeschaltet ist, wird die Nummer aus Konfigurationsdaten der Vermittlungsanlage 1 gelesen. Sowohl für den Fall, dass sich das rufende Endgerät im privaten Telekommunikationsnetz 6 (über QSIG angeschlossen) und im öffentlichen Telekommunikationsnetz 5 befindet (über DSS1 angeschlossen) wird die Rufnummer aus der Verbindungsaufbaumeldung (Setup-Meldung) des rufenden Endgerätes erhalten.

Erfindungsgemäss richtet also die Vermittlungsanlage 1 über das Netzwerk 3 Anfragen an die Recheneinheit 4, um für eine der Recheneinheit 4 übergebene Rufnummer des rufenden Endgerätes die entsprechende übergeordnete Rufnummer zu ermitteln. Die ermittelte übergeordnete Rufnummer wird daraufhin der Vermittlungsanlage 1 übermittelt und von dieser an das gerufene Endgerät signalisiert.

Wie in der Figur 1 gezeigt, können an das private Telekommunikationsnetz 6 weitere Vermittlungsanlagen 2 (in Figur 1 exemplarisch PABX-Y) angeschlossen sein. Sofern die weitere Vermittlungsanlage 2 nicht über einen eigenen Zugang zum Netzwerk 3 verfügt (wie in Figur 1 dargestellt) oder das erfindungsgemäße Verfahren nicht unterstützt, müssen alle übergeordneten Rufnummern der Vermittlungsanlage 1 zugeordnet sein.

Zusammengefasst unterstützt das erfindungsgemäße Verfahren gerufene Endgeräte, die
- an das öffentliche Telekommunikationsnetz 5 angeschaltet sind (B1, B2),
- intern an die Vermittlungsanlage 1 angeschaltet sind (B3), und
- an die weitere Vermittlungsanlage 2 über das private Telekommunikationsnetz 6 angeschaltet sind (B4).

Das erfindungsgemäße Verfahren unterstützt weiterhin rufende Endgeräte, die
- an das öffentliche Telekommunikationsnetz 5 angeschaltet sind (A1, A2, A3), sofern das Gespräch zum gerufenen Teilnehmer B über die Vermittlungsanlage 1 aufgebaut wird,
- intern an die Vermittlungsanlage 1 angeschaltet sind (A4, A5), und
- an die weitere Vermittlungsanlage 2 über das private Telekommunikationsnetz 6 angeschaltet sind (A6).

Das erfindungsgemäße Verfahren unterstützt Telekommunikationsstrukturen, die
- aus einer einzelnen Vermittlungsanlage bestehen (nur Vermittlungsanlage 1 ohne Zugang zum privaten Telekommunikationsnetz 6), und die
- aus vernetzten Vermittlungsanlagen aufgebaut sind.

Dabei ist es möglich, dass im Netz nur eine einzelne Vermitt-. lungsanlage, mehrere Vermittlungsanlagen oder auch alle Vermittlungsanlagen die erfindungsgemäße Funktionalität zur Verfügung stellen (in Figur 1 nur Vermittlungsanlage 1).

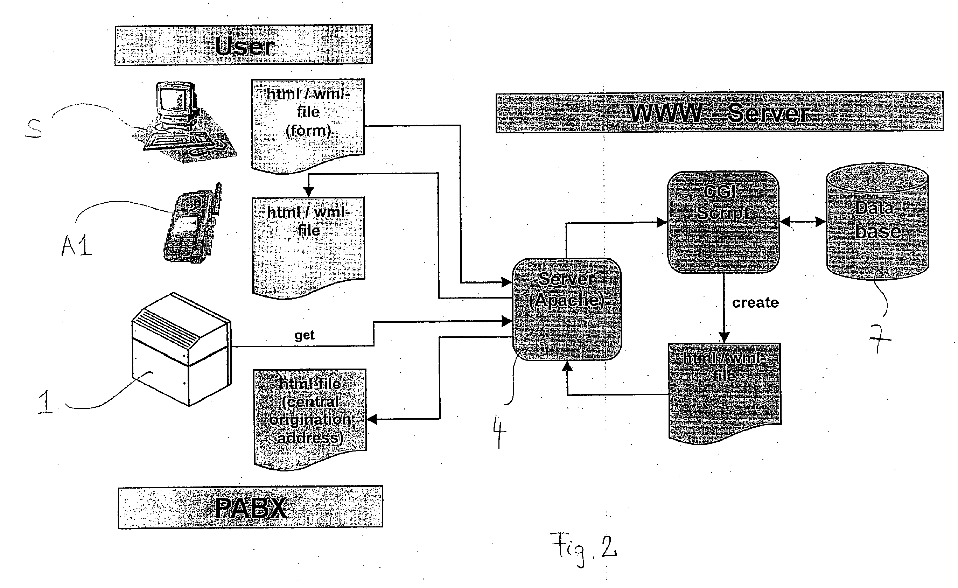

Figur 2 zeigt eine schematische Darstellung eines Ausführungsbeispiels des erfindungsgemäßen Verfahrens. Die Figur zeigt prinzipiell einen Zugriff der Vermittlungsanlage 1, des rufenden Endgerätes A1 sowie eines Systemadministrators S auf die Recheneinheit 4 mit einer angeschlossenen Datenbank 7.

Die Figur zeigt einen Web-Server, wobei die Recheneinheit 4 Zugriffe auf die Datenbank 7 über CGI-Skripte durchführt und eine HTML/WML-Antwort an aufrufende Browser der Vermittlungsanlage 1, des rufenden Endgerätes A1 und des Systemadministrators S generiert. Die Zugriffe auf die Recheneinheit 4 stammen entweder von einem Benutzer, der Daten auf der Datenbank 7 verwalten möchte oder von der Vermittlungsanlage 1, die Anfragen an die Recheneinheit 4 richtet, um zu einer Endgerätenummer eines rufenden Teilnehmers die zugehörige übergeordnete Rufnummer zu erhalten. Unter Benutzer können dabei sowohl die Systemadministratoren S als auch die "Inhaber" der übergeordneten Rufnummern verstanden werden. Dabei können die Inhaber der übergeordneten Rufnummern nur ihre eigenen höchstpersönlichen Daten einsehen oder bearbeiten, wohingegen die Systemadministratoren S über Rechte zur Einrichtung, Löschung und Sperrung der Daten auf der Datenbank 7 verfügen.

Ein Prinzip zur Ermittlung der übergeordneten Rufnummer funktioniert dabei wie folgt:

Die Daten zur Ermittlung der übergeordneten Rufnummer werden von der Recheneinheit 4 (mit z.B. einem Web-Server APACHE) zur Verfügung gestellt. Der Web-Server kann Bestandteil eines Intranets des Betreibers der Vermittlungsanlage 1 oder kann im Internet angesiedelt sein, so dass beispielsweise ein Dienstanbieter diesen Dienst für Betreiber von Vermittlungsanlagen anbieten kann.

Ein in Figur 2 prinzipiell dargestellter Datenfluss funktioniert folgendermaßen: Die Recheneinheit 4 verwaltet eine Seite, über die zentral ein Zugriff auf die Daten für alle rufenden Endgeräte A1 bis A6 erfolgt. Diese Seite erhält beispielsweise eine Bezeichnung "Endgeräte". Damit kann sich für diese Seite folgende URL ergeben:
www.mycompany.com/endgeraete.

Für die Übergabe der Parameter (im vorliegenden Fall nur Rufnummern der rufenden Endgeräte) wird CGI (Common Gateway Interface) genutzt. Die Parameter können dabei als Formulardaten nach dem sogenannten GET-Verfahren übertragen werden. Beim GET-Verfahren werden die Formulardaten, getrennt durch ein Fragezeichen, direkt hinter die URL-Adresse des CGI-Programmaufrufs angehängt. Unter Berücksichtigung der Vorgabe, dass eine Rufnummer nur unter ihrem höchsten Adressierungslevel nachgefragt wird, ergibt sich beispielsweise für einen von seinem Privatanschluss (hier beispielsweise in Neuss mit der nationalen Vorwahl 2131) über die Vermittlungsanlage 1 in Düsseldorf wählenden Mitarbeiter mit der nationalen Rufnummer 2131 123456 die folgende Syntax:
www.mycompany.com/endgeraete?oad=492131123456

Die obige Abfrage der übergeordneten Rufnummer durch die Vermittlungsanlage 1 entspricht also einer http-Syntax einer Browseranfrage an die Recheneinheit 4. Eine Antwort der Recheneinheit 4 an die Vermittlungsanlage 1 erfolgt ebenfalls in diesem Format.

Ähnliches gilt, wenn statt der GET-Methode die sogenannte POST-Methode verwendet wird. Bei der http-Methode POST werden die zu übertragenden Informationen im Körper der Anfrage (Entity-Body) an die Recheneinheit 4 weitergereicht. Aus dem CGI-Skript werden die Informationen über die Standardeingabe der Recheneinheit 4 ausgelesen und können entsprechend ausgewertet werden.

Die Datenbank 7 wird vorzugsweise im XML-Standard definiert und von einem XSLT-Parser in Abhängigkeit vom User-Client (beispielsweise Standard-Web-Browser oder WAP-Browser) in das jeweilige Format des User-Clients umgewandelt. Im vorliegenden Ausführungsbeispiel ist das Format HTML oder WML, wobei das Konzept für zukünftige Dateiformate erweiterbar ist.

In vorteilhafter Weise ist somit ein Zugriff auf die Recheneinheit 4 bzw. die Datenbank 7 für verschiedenste Endgeräte, wie beispielsweise für ein Mobiltelefon, einen Personal Computer, ein Festnetztelefon, einen ISDN-Datenzugang, usw. ermöglicht.

Sowohl zwischen den Benutzern und der Recheneinheit 4 als auch zwischen der Vermittlungsanlage 1 und der Recheneinheit 4 kann in vorteilhafter Weise ein den individuellen Sicherheitserfordernissen angemessener Verschlüsselungsalgorithmus verwendet werden. Grundlage hierfür ist vorzugsweise SSL (Secure Sockets Layer), ein Protokoll, das eine Protokollschicht zwischen TCP und der Anwendungsschicht, hier beispielsweise http, definiert.

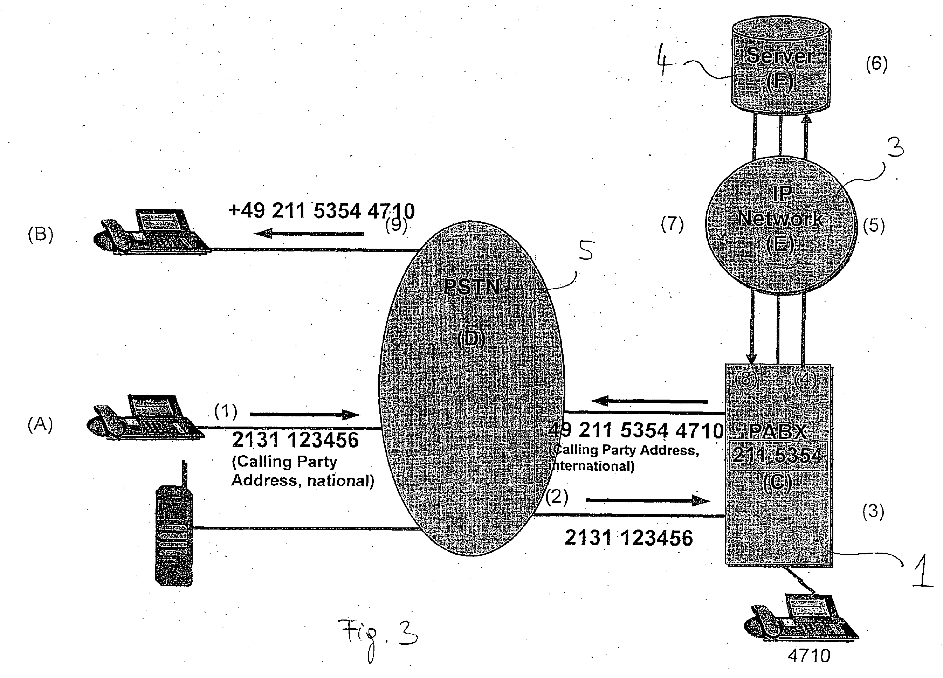

Figur 3 zeigt eine schematische Darstellung eines weiteren Ausführungsbeispiels des erfindungsgemäßen Verfahrens. Die Figur zeigt einen prinzipiellen Ablauf zur Ermittlung einer übergeordneten Rufnummer eines von einem rufenden Teilnehmer A benutzten rufenden Endgerätes, sowie einer Übermittlung der ermittelten übergeordneten Rufnummer durch die Vermittlungsanlage 1 an ein vom gerufenen Teilnehmer B benutzten gerufenen Endgerätes.

Die Figur zeigt eine prinzipielle Darstellung eines Verbindungsaufbaus zwischen dem rufenden Teilnehmer A und dem gerufenen Teilnehmer B. Ein im öffentlichen Telekommunikationsnetz 5 angeschlossenes rufendes Endgerät mit der Rufnummer (0)2131 123456 des Teilnehmers A ruft ein ebenfalls an das öffentliche Telekommunikationsnetz 5 angeschaltetes Endgerät des gerufenen Teilnehmers B über die Vermittlungsanlage 1 an. Der Anruf kann über das im Stand der Technik bekannte Remote Inward System Access (RISA) Verfahren erfolgen. Bei diesem Verfahren kann beispielsweise ein im öffentlichen Telekommunikationsnetz 5 angeschaltetes, rufendes Endgerät eine Verbindung zu einem ebenfalls im öffentlichen Telekommunkationsnetz 5 angeschalteten, gerufenen Endgerät über eine bestimmbare Vermittlungsanlage 1, beispielsweise eine Vermittlungsanlage eines Unternehmens, aufbauen.

Die übergeordnete Rufnummer des rufenden Endgerätes des Teilnehmers A ist der Vermittlungsanlage 1 zugeordnet und lautet (0)211 5354 4710. Bei dieser übergeordneten Rufnummer kann es sich um ein reales Endgerät oder um einen virtuellen Anschluss handeln. Der Vorgang der Ermittlung der übergeordneten Rufnummer des rufenden Endgerätes und die Übermittlung der übergeordneten Rufnummer des rufenden Endgerätes an das gerufene Endgerät erfolgt in analoger Weise wie zuvor anhand der Figur 1 beschrieben.

Mit der anhand der Figur 3 gezeigten Ausführungsform des erfindungsgemäßen Verfahrens zur Ermittlung der übergeordneten Rufnummer des rufenden Teilnehmers ist es also - in analoger Weise wie zuvor bei Figur 1 beschrieben - möglich, dem gerufenen Endgerät des gerufenen Teilnehmers B eine übergeordnete Rufnummer des rufenden Endgerätes des rufenden Teilnehmers A zu übermitteln. Dies hat den Vorteil, dass für den Fall eines Rückrufes des gerufenen Teilnehmers B an den Teilnehmer A Verbindungskosten des rückrufenden Teilnehmers B insoweit abzusehen sind, als der rückrufende Teilnehmer B lediglich die Verbindungskosten für die Verbindung zur Vermittlungsanlage 1 zu tragen hat.

Weiterhin ist es für den rufenden Teilnehmer A von Vorteil, dass dem gerufenen Teilnehmer B die Rufnummer des tatsächlich benutzten Endgerätes nicht übermittelt wird, wobei die übermittelte übergeordnete Rufnummer für den Fall eines Rückrufes des Teilnehmers B dazu dienen kann, den Rückruf zu beliebig auswählbaren Endgeräten des Teilnehmers A einzurichten. Eine Erreichbarkeit des anrufenden Teilnehmers A für den Fall des Rückrufes des gerufenen Teilnehmers B ist somit in vorteilhafter Weise gesteigert.

Das anhand der Ausführungsbeispiele mit den Figuren 1 und 3 beschriebene erfindungsgemässe Verfahren ist erfindungsgemäß mit der kompletten Topologiestruktur der in Figur 1 gezeigten Telekommunikationsvorrichtung einsetzbar. Somit ist das erfindungsgemäße Verfahren zwischen anrufenden Endgeräten A1 bis A6 bzw. gerufenen Endgeräten B1 bis B4 einsetzbar, die sich an beliebigen Orten in der in Figur 1 gezeigten Topologiestruktur befinden. Dabei kann eine Grundversion des erfindungsgemäßen Verfahrens beispielsweise eine Ermittlung der übergeordneten Rufnummer des rufenden Endgerätes A4 betreffen, wobei das rufende und das gerufene Endgerät A4, B3 unmittelbar an die Vermittlungsanlage 1 angeschaltet sind.

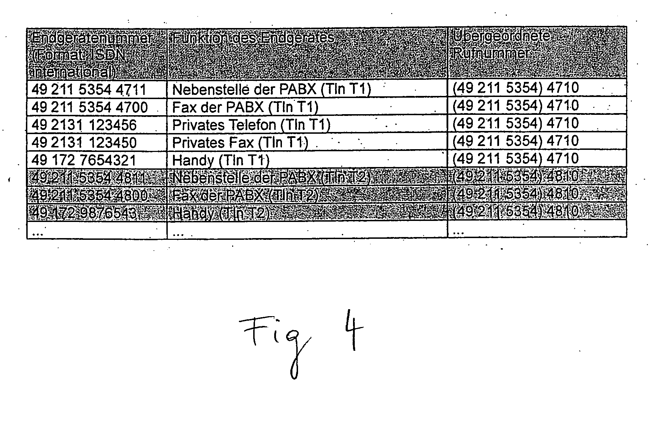

Figur 4 zeigt schematisch eine in der Vermittlungsanlage 1 abgelegte Tabelle, in der eine Zuordnung von Rufnummern der rufenden Endgeräte von Teilnehmern T1, T2 zu übergeordneten Rufnummern der rufenden Endgeräte der Teilnehmer T1, T2 eingetragen ist. Die Tabelle kann über Verwaltungsprogramme der Vermittlungsanlage 1 eingerichtet werden und ist nur vom Systemadministrator S zu ändern. Bevor eine übergeordnete Rufnummer aus Sicht der Vermittlungsanlage 1 in gehender Richtung signalisiert wird, wird diese auf das internationale Format gemäß E.164 Standard angehoben, wobei in der Tabelle nach einem übereinstimmenden Eintrag gesucht und die Rufnummer durch die übergeordnete Rufnummer ersetzt wird.

Weitere Vorteile des zuvor beschriebenen erfindungsgemäßen Verfahrens liegen darin, dass alle rufenden Endgeräte der rufenden Teilnehmer ihre individuellen Rufnummern behalten. Alle übergeordneten Rufnummern liegen ferner bevorzugt im Rufnummernbereich der Vermittlungsanlage 1. Dies hat insbesondere den Vorteil, dass Angestellte von Unternehmen über ein und dieselbe Vermittlungsanlage 1 in einfacher Weise über ihre übergeordnete Rufnummer ihre Identität als Unternehmensangehörige signalisieren können. In vorteilhafter Weise können für die Anwendung des erfindungsgemäßen Verfahrens Standardwerkzeuge und Einrichtungen gemäß dem Stand der Technik genutzt werden.

Dadurch, dass herkömmliche Vermittlungsanlagen neben den Schnittstellen der konventionellen Telekommunikation (A/B, digitale Endgeräte, digitale Leitungen (DSS1, QSIG)) zunehmend auch über einen oder mehrere Zugänge zu einem IPbasierten Netzwerk (LAN oder WAN) verfügen, ist es in vorteilhafter Weise möglich, das erfindungsgemäße Verfahren für herkömmliche Vermittlungsanlagen einzusetzen.

### Bezugszeichenliste

- 1: Vermittlungsanlage
- 2: weitere Vermittlungsanlage
- 3: Netzwerk
- 4: Recheneinheit
- 5: Öffentliches Telekommunikationsnetz
- 6: Privates Telekommunikationsnetz
- 7: Datenbank
- A1-A6: rufende Endgeräte
- B1-B4: gerufene Endgeräte
- S: Systemadministrator

## Patentansprüche

1. Verfahren zum Aufbauen einer Telefonverbindung für einen beliebigen Dienst zwischen einem rufenden Endgerät (A1-A6) und einem gerufenen Endgerät (B1-B4) über eine Vermittlungsanlage (1), wobei die Vermittlungsanlage (1) einen Verbindungswunsch erhält, wobei der Vermittlungsanlage (1) eine Rufnummer des rufenden Endgerätes (A1-A6) und eine Rufnummer des gerufenen Endgerätes (B1-B4) übermittelt wird, und wobei die Vermittlungsanlage (1) die Telefonverbindung zum gerufenen Endgerät (B1-B4) aufbaut, wobei die Rufnummer des rufenden Endgerätes (A1-A6) dem gerufenen Endgerät (B1-B4) nicht übermittelt wird,
**dadurch gekennzeichnet,**
**dass** die Vermittlungsanlage (1) aus der Rufnummer des rufenden Endgerätes (A1-A6) eine einstellbare, übergeordnete Rufnummer ermittelt und an das gerufene Endgerät (B1-B4) übermittelt, dass die Vermittlungsanlage (1) an ein Netzwerk (3) angeschlossen ist, dass eine Recheneinheit (4) an das Netzwerk (3) angeschlossen ist, wobei Rufnummern der rufenden Endgeräte (A1-A6) mit den zu den Rufnummern korrespondierenden übergeordneten Rufnummern in der Recheneinheit (4) abgelegt sind, und wobei die Vermittlungsanlage (1) zum Ermitteln der übergeordneten Rufnummern über das Netzwerk (3) auf die Recheneinheit (4) zugreift.

2. Verfahren nach Anspruch 1, **dadurch gekennzeichnet, dass** die Vermittlungsanlage (1) an ein Netzwerk (3) angeschlossen ist, dass eine Recheneinheit (4) an das Netzwerk (3) angeschlossen ist, wobei Rufnummern der rufenden Endgeräte (A1-A6) mit den zu den Rufnummern korrespondierenden übergeordneten Rufnummern in der Recheneinheit (4) abgelegt sind, und wobei die Vermittlungsanlage (1) zum Ermitteln der übergeordneten Rufnummern über das Netzwerk (3) auf die Recheneinheit (4) zugreift.

3. Verfahren nach Anspruch 2, **dadurch gekennzeichnet, dass** die Vermittlungsanlage (1) und weitere Vermittlungsanlagen (2) an ein Telekommunikationsnetz (6) angeschaltet sind, wobei nur eine Vermittlungsanlage (1) über das Netzwerk (3) auf die Recheneinheit (4) zugreift.

4. Verfahren nach Anspruch 2 oder 3, **dadurch gekennzeichnet, dass** die übergeordneten Rufnummern im Rufnummernbereich der Vermittlungsanlage (1) liegen.

5. Verfahren nach einem der Ansprüche 2 bis 4, **dadurch gekennzeichnet, dass** von der Vermittlungsanlage (1) eine Anfrage zur Ermittlung der übergeordneten Rufnummer an die Recheneinheit (4) gesendet wird,
dass die von der Recheneinheit (4) ermittelte übergeordnete Rufnummer über das Netzwerk (3) von der Vermittlungsanlage (1) empfangen wird, und
dass von der Vermittlungsanlage (1) die übergeordnete Rufnummer an das gerufene Endgerät (B1-B4) übermittelt wird.

6. Verfahren nach einem der Ansprüche 2 bis 5, **dadurch gekennzeichnet, dass** die Recheneinheit (4) als Server ausgebildet ist.

7. Verfahren nach einem der Ansprüche 1 bis 6, **dadurch gekennzeichnet, dass** die Rufnummern der rufenden Endgeräte (A1-A6) und die übergeordneten Rufnummern durch eine Datenverbindung zur Vermittlungsanlage (1) über die rufenden Endgeräte (A1-A6) verwaltet werden.

8. Verfahren nach einem der Ansprüche 1 bis 7, **dadurch gekennzeichnet, dass** Änderungen einer Zuordnung zwischen den Rufnummern der rufenden Endgeräten (A1-A6) und den übergeordneten Rufnummern verschlüsselt durchgeführt werden.

9. Verfahren nach Anspruch 1, **dadurch gekennzeichnet, dass** die Rufnummern der rufenden Endgeräte (A1-A6) und die übergeordneten Rufnummern in der Vermittlungsanlage (1) abgelegt sind.

10. Verfahren zum Ermitteln einer Rufnummer eines rufenden Endgerätes (A1-A6),
**dadurch gekennzeichnet,**
**dass** von einer Recheneinheit (4) eine Rufnummer eines der rufenden Endgeräte (A1-A6) von einer Vermittlungsanlage (1) empfangen wird, und dass die Recheneinheit (4) aus der Rufnummer des rufenden Endgerätes (A1-A6) eine übergeordnete Rufnummer ermittelt und an die Vermittlungsanlage (1) ausgibt.

11. Verfahren nach Anspruch 9, **dadurch gekennzeichnet, dass** die Recheneinheit (4) und die Vermittlungsanlage (1) über ein Netzwerk (3) verbunden werden, wobei in der Recheneinheit (4) unterschiedliche Rufnummern der rufenden Endgeräte (A1-A6) mit den zu den unterschiedlichen Rufnummern korrespondierenden übergeordneten Rufnummern abgelegt sind, wobei von der Recheneinheit (4) über das Netzwerk (3) eine Anfrage zum Ermitteln der übergeordneten Rufnummer von der Vermittlungsanlage (1) empfangen wird, und dass von der Recheneinheit (4) die ermittelte übergeordnete Rufnummer über das Netzwerk (3) an die Vermittlungsanlage (1) ausgegeben wird.

12. Verfahren nach einem der Ansprüche 9 oder 10, **dadurch gekennzeichnet, dass** der Recheneinheit (4) die Anfrage zum Ermitteln der übergeordneten Rufnummer des rufenden Endgerätes (A1-A6) und/oder eine Anfrage zur Änderung einer Zuordnung der Rufnummer des rufenden Endgerätes (A1-A6) zur übergeordneten Rufnummer übergeben wird,
dass die Recheneinheit (4) aus den Anfragen eine Anfrage in CGI-Skript erstellt und die CGI-Skript-Anfrage an eine Datenbank (7) weitergibt, und
dass die Datenbank (7) die Anfragen bearbeitet und das Ergebnis an die Recheneinheit (4) zurückgibt.

13. Verfahren nach Anspruch 11, **dadurch gekennzeichnet, dass** die Datenbank (7) als Antwort auf die Anfragen eine htmloder wml-Datei erstellt und an die Recheneinheit (4) übermittelt.

14. Verfahren nach einem der Ansprüche 9 bis 12, **dadurch gekennzeichnet, dass** die Zuordnung der Rufnummern der rufenden Endgeräte (A1-A6) zu den übergeordneten Rufnummern über eine Datenverbindung zur Recheneinheit (4) verwaltet wird.

15. Verfahren nach einem der Ansprüche 9 bis 13, **dadurch gekennzeichnet, dass** Änderungen der Zuordnung der Rufnummern der rufenden Endgeräte (A1-A6) zu den übergeordneten Rufnummern verschlüsselt durchgeführt werden.

16. Vermittlungsanlage, die ausgebildet ist, um ein Verfahren nach Anspruch 1 abzuarbeiten.

17. Recheneinheit, die ausgebildet ist, um ein Verfahren nach Anspruch 10 abzuarbeiten.
